(19) **Europäisches Patentamt / European Patent Office / Office européen des brevets**

(11) **EP 4 066 647 B1**

(12) **EUROPEAN PATENT SPECIFICATION**

(45) Date of publication and mention
of the grant of the patent:
**03.09.2025 Bulletin 2025/36**

(21) Application number: **21166124.4**

(22) Date of filing: **31.03.2021**

(51) International Patent Classification (IPC):
**A23C 9/142** *(2006.01)* **A23C 9/15** *(2006.01)*

(52) Cooperative Patent Classification (CPC):
(C-Sets available)
**A23C 9/14; A23C 1/00; A23C 9/1422; A23C 9/16;
A23J 1/20; A23J 3/08; A23L 33/19; A23L 33/40;
A23V 2002/00** (Cont.)

(54) **A METHOD OF PRODUCING LOW-LACTOSE MILK PROTEIN ISOLATE**

VERFAHREN ZUR HERSTELLUNG VON MILCHPROTEINISOLAT MIT NIEDRIGEM
LAKTOSEGEHALT

PROCÉDÉ DE PRODUCTION D'ISOLAT DE PROTÉINES DE LAIT À FAIBLE TENEUR EN
LACTOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2022 Bulletin 2022/40**

(73) Proprietor: **The Provost, Fellows, Scholars and
other
Members of Board of Trinity College Dublin
Dublin 2 (IE)**

(72) Inventors:
• **PADAMATI, Ramesh Babu
Hansfield (IE)**
• **PEDNEKAR, Mukesh Prabhakar
Rathgar (IE)**

(74) Representative: **Purdylucey Intellectual Property
23 Ely Place
Dublin 2 D02 N285 (IE)**

(56) References cited:
**WO-A1-01/41578      WO-A1-2009/079691
US-A- 6 139 901      US-A1- 2004 224 069
US-A1- 2010 021 595      US-A1- 2019 289 868**

(52) Cooperative Patent Classification (CPC): (Cont.)

C-Sets
A23V 2002/00, A23V 2250/5424, A23V 2300/34,
A23V 2300/48, A23V 2300/50

**Description**

Field of the Invention

The present invention relates to a method of producing a low-lactose milk protein isolate

Background to the Invention

Milk protein concentrate (MPC) and Milk protein isolates (MPI) are high protein products produced from skimmed milk. They are widely used in different food products based on their protein content and purity. The common applications include desserts, baked foods, toppings, low fat spreads, dairy-based beverages, texture improvement in yogurts and nutritional drinks. The composition of protein, lactose, calcium and other minerals dictates the use of MPC in various applications.

Currently MPC and MPI are produced using continuous membrane separation process followed by diafiltration to obtain various grades of MPC and MPI. MPI has a higher protein concentration than MPC (generally 85% or more protein "as is"), and a lower level of lactose. See comparative Figure A. However, the level of calcium and lactose in conventional MPC and MPI inhibits the use in niche applications such as clinical products, infant formula and sports market.

Current methods of producing low-lactose MPI's generally involve use of enzymes (US8986768), which are undesirable due to the generation of additional compounds such as glucose and galactose from enzymatic breakdown of lactose, and ion-exchange resins (EP2068646) which are undesirable due to the leaching of ions from the resins which end up in the product. Another method of preparing a protein concentrate with reduced lactose, which comprises steps of pH adjustment, ultrafiltration and diafiltration, is disclosed in US 6 139 901 A. The use of ultra-sonication in the processing of dairy ingredients in disclosed in e.g., WO 2009/079691 A1.

It is an object of the invention to overcome at least one of the above-referenced problems.

Summary of the Invention

The Applicant has addressed the problems of the prior art by providing a process for producing a low-lactose milk concentrate (for example, a low-lactose milk protein isolate; MPI) from a milk concentrate (for example, a milk protein concentrate; MPC) that comprises treating the substrate to ultra-sonication following by diafiltration. The method successfully reduces the level of lactose in the product to less than 0.51% (%DM) and, in addition, significantly reduces the calcium levels in the product. This is illustrated in Table 3 and Table 4 where the low-lactose MPI produced according to the method of the invention has more than 20% depletion in calcium compared to the starting MPC substrate, less than 1% lactose (%DM), and in some cases a higher protein concentration. As compared to existing solutions, this is a simple process that obviates the requirement of enzymatic and ion-exchange methodologies.

In a first aspect, the invention provides a method of producing a low-lactose milk protein concentrate comprising the steps of:

    providing a starting liquid milk protein concentrate;
    pre-treating the milk protein concentrate by ultra-sonication; and
    treating the pre-treated milk protein concentrate by diafiltration to provide a low-lactose calcium-depleted milk protein concentrate.

Also disclosed, but not part of the claimed invention, is a method of calcium depletion of a milk product, for example a milk concentrate, comprising pre-treating the milk product by ultra-sonication, and treating the pre-treated milk product by diafiltration to provide a calcium depleted milk product.

In one embodiment, the liquid milk protein concentrate is obtained by ultrafiltration (UF) followed by diafiltration and optionally has a degree of diafiltration of 70-120%, 75-110% or 80-105%.

In one embodiment, the liquid milk protein concentrate comprises 40-90% protein, 60-90% protein, 70-90% protein, or 80-90% protein (% DM).

In one embodiment, the liquid milk protein concentrate comprises 1-6% lactose, 2-6% lactose, 3-6% lactose, or 4-6% lactose (% DM).

In one embodiment, the liquid milk protein concentrate comprises 2.3-4% calcium (% DM). In one embodiment, the method produces a product that is depleted in calcium compared with the substrate by at least 10%, 15%, 20% or 25% (% DM).

In one embodiment, the liquid milk protein concentrate substrate comprises at 70-87% protein, 1-6% lactose, and 2.3-4% calcium (% DM)

In one embodiment, the low-lactose milk protein concentrate produced by the method of the invention comprises less than 0.55% lactose (% DM).

In one embodiment, the low-lactose milk protein concentrate produced by the method of the invention comprises less than 0.50% lactose (% DM).

In one embodiment, the low-lactose milk protein isolate produced by the method of the invention comprises less than 0.55% lactose (% DM).

In one embodiment, the low-lactose milk protein concentrate produced by the method of the invention comprises more than 90% protein (% DM).

In one embodiment, the low-lactose milk protein concentrate produced by the method of the invention comprises less than 2% calcium (% DM).

In one embodiment, the pre-treated milk protein concentrate is treated by diafiltration to a degree of at least 80, 90, 100, 105, 110, or 115 % DF.

In one embodiment, the diafiltration step employs soft water or a dilute salt solution as a diafiltration media.

In one embodiment, the dilute salt solution has a salt concentration of 0.075-0.150M salt solution.

In one embodiment, the method comprises a step of drying the low-lactose milk protein concentrate to a powder. Various drying methods may be used to dry the concentrate, including spray-drying, fluidised bed drying, vacuum drum drying, and evaporation.

Also disclosed, but not part of the claimed invention, is a low-lactose milk protein concentrate obtained by the method of the invention.

Also disclosed, but not part of the present invention, is a composition comprising a low-lactose milk protein concentrate obtained by the method of the invention. The composition is generally a comestible composition, for example a food product, beverage, infant formula, a food for special medical purpose (FSMP), or nutritional supplement.

Also disclosed, but not part of the present invention, is a an infant formula comprising a low-lactose milk protein concentrate obtained according to the method of the invention.

Other aspects and preferred embodiments of the invention are defined and described in the other claims set out below.

Brief Description of the Figures

**FIG. A (Comparative):** Conventional process for the preparation of MPC/MPI powder from milk.

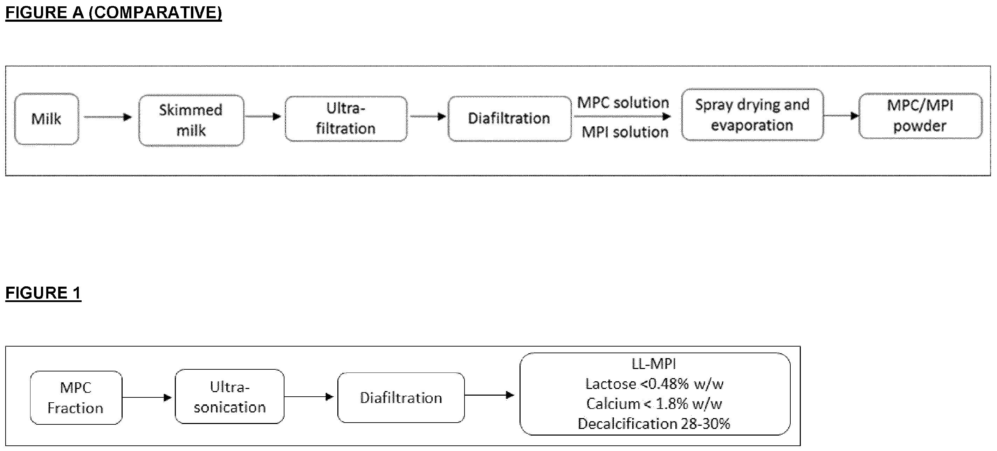

**FIG.1:** Process according to the invention involving ultra-sonication and membrane process.
**FIG. 2:** Set-up of ultra-sonication system (A) and continuous diafiltration system (B).
**FIG. 3:** Schematic representation of continuous diafiltration.

Detailed Description of the Invention

Definitions and general preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa*. The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or open-ended and does not exclude additional, unrecited integers or method/process steps.

As used herein, the term "milk protein concentrate" or "MPC" should be understood to mean skimmed milk concentrate that has been concentrated generally by a membrane filtration process to a protein level of up to 90% and typically 40-89% milk protein (% DM) and contains more than 1% lactose (% DM), generally 1-6% or 2-6% lactose depending on the method of manufacturing. Generally, it is produced by ultrafiltration optionally combined with diafiltration. The casein and whey proteins are generally present in the same ratio as found in unprocessed skimmed milk.

As used herein, the term "milk protein isolates" or "MPI" should be understood to mean high purity protein product produced from milk protein concentrate (MPC) by diafiltration and that contains at least 85% (%DM) protein. In one embodiment a milk protein isolate is a skimmed milk protein concentrate produced by membrane filtration process that contains higher protein content and less than 2% lactose (%DM) as compared to milk protein concentrate. The milk protein isolate has been prepared by membrane process involving high degree of diafiltration. In this case diafiltration of MPC is performed in the range of 120-190 %DF and preferably about 150-180 %DF.

The substrate of the method of the invention may be a milk protein concentrate and the product may be a milk protein isolate. The term "milk protein concentrate with at least 80 %DF" or "MPC with at least 80 %DF" indicates milk protein concentrate fraction obtained after diafiltration is performed to a level of at least 80 %DF.

As used herein, the term "low-lactose" as applied to milk protein isolates produced by the method of the invention should be understood to mean a lactose concentration of less than 1% (% DM), and preferably less than 0.7%, 0.6%, 0.55% or 0.5% lactose (% DM).

As used herein, the term "calcium depleted" as applied to a low-lactose milk protein isolates means a milk protein isolates that has a calcium level that is depleted compared with the starting milk protein concentrate, and generally depleted by at least 10%, 15%, 20% or 25% (% DM). In one embodiment, the calcium depleted milk protein isolates has less than 2% calcium (% DM).

As used herein, the term "ultra-sonication" should be understood to mean the application of sound energy of ultrasonic frequency (about 20 KHz or higher) to a liquid to breakdown particles in the liquid by means of cavitation effect. In the present case, the purpose of the ultra-sonication step is to disrupt casein micelles in the MPC and release calcium phosphate which is then removed in the subsequent diafiltration step. Ultra-sonication may be performed at 50-100% amplitude, preferably about 100% amplitude. Generally, a plurality of ultra-sonication steps are performed on the MPC. In one embodiment, the ultra-sonication step employs an ultra-sonicator system - such systems are supplied by Hielscher-Ultrasound Technology; Model: UIP1500hdT.

As used herein, the term "diafiltration" should be understood to mean a process involving ultrafiltration membrane to washing out low molecular weight components (in this case lactose and minerals) in the membrane retentate ( in this case MPC and ultrasonicated MPC) by addition of water or DF media into a retentate and removal of permeate from the membrane. The diafiltration is the washing process that involves addition of DF media into substrate and subsequent removal of DF media through membrane that leads to depletion of components other than the product depending on the membrane pore size.

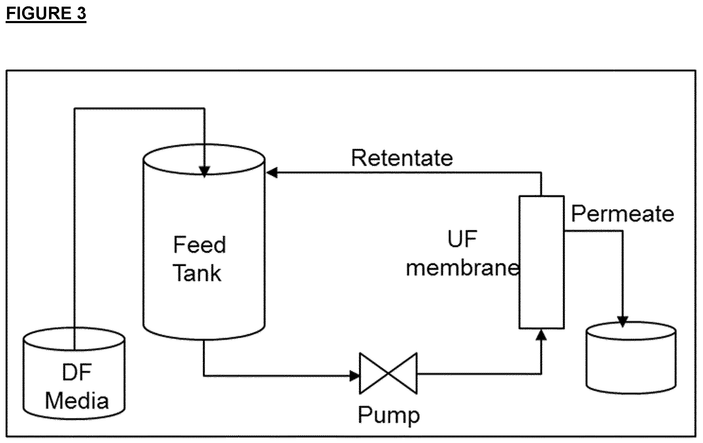

The diafiltration process may be a batch or continuous process. An example of a system for performing continuous diafiltration is illustrated in Figure 3. The diafiltration (DF) media may preferably be water, preferably soft water or a dilute salt solution. At the start of the process, the substrate (i.e. MPC and ultrasonicated MPC) is generally mixed with DF media, typically in a 1:1 volumetric ratio, and fresh DF media is preferably added to the UF retentate in a feed tank at a rate similar to UF permeate flow rate. In one embodiment, the diafiltration step is configured to achieve 170-190 % DF. In one embodiment, the UF membrane has a molecular weight cut off (MWCO) of about 10,000 Da, although membranes with different MWCO may be employed. In a preferred embodiment, diafiltration is performed at below room temperature, typically about 12-18°C and ideally about 15°C.

As used herein, the term "% DM" or "% dry matter" as applied to a component of a milk product should be understood to mean the amount of the component as a % of the dry matter in the milk product by weight. Thus, an MPC having 80% protein (% DM) means that when the MPC is dried to a powder, 80% by weight of the powder will be protein.

As used herein, the term "% DF" as applied to a MPC or MPI should be understood to mean the degree to which the MPC or MPI has been diafiltered as a %. DF % is calculated based on the volume of skimmed milk processed to prepare MPC fraction. It is calculated as per the following formula.

$$\%DF= \text{Volume of DF media utilized for DF} \times 100/ \text{Volume of skimmed milk}$$

For instance, to achieve 180% DF of MPC fractions, the DF media is calculated as shown in the Table 1. The value of DF media is varies depending on the DF % of MPC fraction.. For milk protein concentrate with 80% DF and milk protein concentrate with 105% DF (produced from 5X concentration of skimmed milk) the DF media 75L and 56.25L is required to obtain 180% DF.

Table 1

Calculation of DF media required to achieve 180% DF

| Skimmed milk (L) | MPC for trial (L) | DF media required for 180% DF (L) | Initial DF % of MPC fraction | DF media added for initial DF% of MPC (L) | DF media needs to be added (L) |
|---|---|---|---|---|---|
| 75 | 15 | 135 | 80 | 60 | **75** |
| 75 | 15 | 135 | 105 | 78.75 | **56.25** |

As used herein, the term "soft water" should be understood to mean containing less than 50 mg/L calcium carbonate.

As used herein, the term "dilute salt solution" should be understood to mean a 0.075-0.150M salt solution in which the salt is a generally a sodium or potassium salt (i.e. NaCl or KCl) that produces ions in solution capable of releasing calcium from the casein micelle.

Exemplification

The invention will now be described with reference to specific Examples. These are merely exemplary and for illustrative purposes only: they are not intended to be limiting and constitute the best mode currently contemplated for practicing the invention.

Substrate

The composition of protein, lactose and calcium in the MPC starting substrate is shown in Table 2.

**Table 2**

**The composition of the MPC fraction**

| Components | Content in MPC fraction* |
|---|---|
| Total Solid (%) | 20 |
| Protein (%DM) | **84** |
| Lactose (%DM) | **4.2** |
| Calcium (%DM) | **2.7** |
| pH (pH Unit) | 6.65 |
| Conductivity (mS/cm) | 4.4 |
| Viscosity (cP at 20°C)** | 89 |

*Values of components (%w/w) in MPC varies depending on the level of DF performed on MPC*
*\*\* Viscosity measurement was performed using a Rheometer from TA Instrument, AR2000ex series with 40mm 2 degree Aluminium cone geometry at shear rate $100s^{-1}$ at 20°C.*

Ultra-sonication and Diafiltration

The ultra-sonication system and membrane separation unit used for the development of innovative hybrid process is shown in Figure 3. In the current process, milk protein concentrate (MPC with 80% DF and MPC with 105% DF) was first subjected to continuous ultra-sonication process using an ultra-sonicator system (Hielscher-Ultrasound Technology; Model: UIP1500hdT, voltage: 230V, amplitude: 50 to 100%) with sonication frequency of 20KHz and Power of 1500W. The ultra-sonication pre-treatment of MPC was performed at 100% amplitude at the feed flow rate of 1l/min. Four cycles of ultra-sonication treatment were performed at 100% amplitude and solution collected at end of 4th cycle labelled as ultra-sonicated MPC (US-MPC). For all trials, diafiltration was performed at 15°C using Spectrum® Hollow fiber ultra-filtration module with membrane having MWCO of 10,000 Da and area of $1.25m^2$.

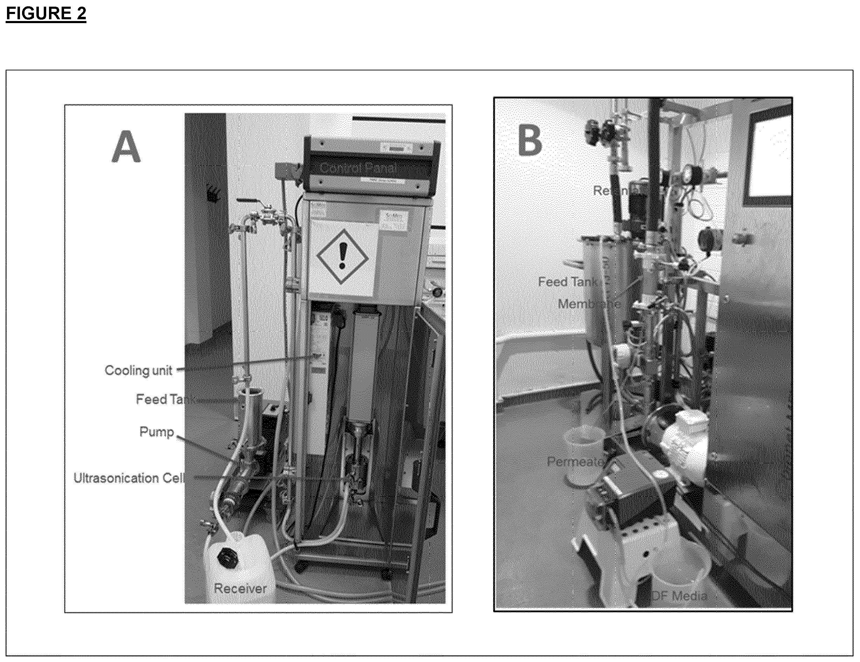

The ultra-sonication and diafiltration system is illustrated in Figs 2A and 2B. The continuous diafiltration process is illustrated in Fig. 3.

Example 1

Diafiltration of MPC using soft water with and without applying ultra-sonication

The experiment was performed with liquid MPC sample of Table 2 that was subjected to 4-cylces of ultra-sonication treatment (amplitude 100%, sonication frequency: 20KHz, temperature 15°C). The MPC treated by ultra-sonication is referred to herein as US-MPC. First, Raw MPC sample (15L) and US-MPC with 80% DF level (15L) was introduced into a feed tank in separate trials. Then 15L soft water (DF media) was added into each tank and mixed continuously at temperature of 15°C. In both trials, the mixture was fed onto ultra-filtration membrane (Spectrum® Hollow fiber module, MWCO 0f 10,000 Da, $1.25m^2$ area) and diafiltration was conducted at 15°C. The membrane permeate was collected separately with simultaneous addition of soft water (60L) to achieve DF level of 180%. The retentate stream was concentrated to achieve total solid content of 20% w/w basis. The membrane retentate i.e. MPI obtained from both trials were analysed for lactose and calcium content.

Example 2

Diafiltration of MPC using soft water with and without applying ultra-sonication

The MPC sample (15L) of Table 2 and ultra-sonication treated MPC (15L) was introduced in a feed tank in separate experiment. The DF media i.e. sodium chloride solution (0.15M, 15L) was added into each tank with continuous stirring at temperature maintained at 15°C. The mixture was then fed onto the ultra-filtration membrane with molecular weight cut-off 10,000 Da (Spectrum® Hollow fiber module with 1.2m² area). The diafiltration was performed in a continuous mode with addition of DF media with simultaneous removal of permeate from membrane. The diafiltration was performed at 15°C to achieve 180% DF level and total solid content level of 20% w/w. The membrane retentate samples from both trials, with and without ultra-sonication, were analysed for lactose and calcium content.

Results

The significance of ultra-sonication pre-treatment in the calcium depletion was prominently observed when diafiltration was performed with MPC as such and ultra-sonicated MPC.
Table 3 indicated 2X increase in calcium removal with ultra-sonication assisted diafiltration. The ultra-sonication of MPC followed by diafiltration using soft water leads to 30.43% calcium removal as compared to that obtained with diafiltration trial without ultra-sonication treatment.

**Table 3**

| Comparative evaluation of ultra-sonication effect on diafiltration of MPC using soft water as a diafiltration media | | | | |
|---|---|---|---|---|
| **Parameter** | **DF of MPC (DF 80%) with Soft water** | | **Ultra-sonication of MPC (DF80%) + DF using soft water** | |
| | **MPC** | **MPI (DF 180%)** | **US-MPC** | **MPI (DF 180%)** |
| Total Solid (%) | 20.5 | 20.8 | 20.98 | 21.07 |
| pH (pH Unit) | 6.7 | 6.92 | 6.22 | 6.83 |
| Conductivity (mS/cm) | 4.44 | 1.09 | 4.44 | 0.502 |
| Protein (%DM) | 83.95 | **89.9** | 83.41 | **96.82** |
| Lactose (%DM) | 3.6 | **<0.48** | 2.38 | **<0.47** |
| Calcium (%DM) | 2.93 | **2.55** | 2.53 | **1.76** |
| Calcium removal (%) | - | **12.97** | - | **30.43** |

The diafiltration trials using dilute sodium chloride solution (0.15M) further confirms the importance of ultra-sonication in the calcium removal from MPC. The ultra-sonication pre-treatment prior to continuous diafiltration leads to 28.13% calcium removal which was 5 times higher than that obtained after diafiltration of MPC without ultra-sonication treatment. The composition of DF media also found to play a role in calcium removal. The diafiltration of ultra-sonicated MPC using soft water and salt solution produce 3X and 5X, respectively, higher calcium depletion than that obtained with their respective control diafiltration experiment involving no ultra-sonication pre-treatment. This attributed to combined action of ultra-sonication and ionic effect due to presence of salts in DF media that leads to release of calcium from protein micelles and further removal through the membrane separation process.

**Table 4**

| Comparative evaluation of ultra-sonication effect on diafiltration of MPC using 0.15M sodium chloride as a diafiltration media | | | | |
|---|---|---|---|---|
| Parameter | DF of MPC (DF 80%) with 0.15M Sodium chloride | | Ultra-sonication of MPC (DF800/0) + DF using 0.15M Sodium chloride | |
| | MPC | MPI (DF 180%) | US-MPC | MPI (DF 180%) |
| Total Solid (%) | 18.45 | 20.25 | 18.7 2 | 20.7 |
| pH (pH Unit) | 6.64 | 6.78 | 6.65 | 6.74 |
| Conductivity (mS/cm) | 5.85 | 1.78 | 4.24 | 8.79 |
| Protein (%DM) | 87.26 | **84.44** | 86 | **87.4** |
| Lactose (%DM) | 1.08 | **<0.49** | 0.53 | **<0.48** |
| Calcium (%DM) | 2.66 | **2.52** | 2.56 | **1.84** |
| Calcium removal (%) | - | **5.26** | - | **28.13** |

The process of the invention involving ultra-sonication pre-treatment and membrane filtration leads to production of Low-Lactose MPI containing lactose less than 0.48 % w/w and protein content more than 87 %w/w, with the maximum of 96.82 %w/w, with higher decalcification level. The maximum calcium removal was obtained (28 to 30%) by combining ultra-sonication pretreatment with membrane separation process and using DF media comprised of soft water and salt solution. This invention proposed the process to produce MPI with desired level of lactose and calcium in final protein product which can be varied depending on the application.

**Claims**

1. A method of producing a low-lactose milk protein concentrate comprising the steps of:

   providing a starting liquid milk protein concentrate;
   pre-treating the milk protein concentrate by ultra-sonication; and
   treating the pre-treated milk protein concentrate by diafiltration to provide a calcium depleted low-lactose milk protein concentrate.

2. A method according to Claim 1, in which the starting liquid milk protein concentrate comprises 70-95% protein, at least 1% lactose and at least 2% calcium (% DM).

3. A method according to Claim 1 or 2, in which the starting liquid milk protein concentrate comprises at 70-87% protein, 1-6% lactose, and 2.3-4% calcium (% DM)

4. A method according to any preceding Claim, in which the low-lactose milk protein concentrate has at least 20% less calcium that the starting liquid milk protein concentrate.

5. A method according to any preceding Claim, in which the low-lactose milk protein concentrate comprises less than 0.55% lactose (% DM).

6. A method according to any preceding Claim, in which the low-lactose milk protein concentrate comprises more than 90% protein (% DM).

7. A method according to any preceding Claim, in which the low-lactose milk protein concentrate comprises less than 2% calcium (% DM).

8. A method according to any preceding Claim, in which the calcium depleted low-lactose milk protein concentrate is a milk protein isolate comprising less than 0.55% lactose and less than 2% calcium (% DM).

9. A method according to Claim 8, the pre-treated milk protein concentrate is treated by diafiltration to a degree of at least 80 % DF.

10. A method according to any preceding Claim, in which the diafiltration step employs soft water or a dilute salt solution as a diafiltration media.

11. A method according to Claim 8, in which the dilute salt solution has a salt concentration of 0.075-0.150M salt solution.

12. A method according to any preceding Claim, including a step of drying the low-lactose milk protein concentrate or isolate to a powder.

**Patentansprüche**

1. Verfahren zur Herstellung eines Milchproteinkonzentrats mit geringer Lactose, das die folgenden Schritte umfasst:

    Bereitstellen eines flüssigen Ausgangsmilchproteinkonzentrats;
    Vorbehandeln des Milchproteinkonzentrats mit Ultraschall; und
    Behandeln des vorbehandelten Milchproteinkonzentrats durch Diafiltration, um ein Calcium-abgereichertes Milchproteinkonzentrat mit geringer Lactose bereitzustellen.

2. Verfahren nach Anspruch 1, wobei das flüssige Ausgangsmilchproteinkonzentrat 70-95 % Protein, mindestens 1 % Lactose und mindestens 2 % Calcium (% TM) umfasst.

3. Verfahren nach Anspruch 1 oder 2, wobei das flüssige Ausgangsmilchproteinkonzentrat 70-87 % Protein, 1-6 % Lactose und 2,3-4 % Calcium (% TM) umfasst.

4. Verfahren nach einem vorstehenden Anspruch, wobei das Milchproteinkonzentrat mit geringer Lactose mindestens 20 % weniger Calcium aufweist als das flüssige Ausgangsmilchproteinkonzentrat.

5. Verfahren nach einem vorstehenden Anspruch, wobei das Milchproteinkonzentrat mit geringer Lactose weniger als 0,55 % Lactose (% TM) umfasst.

6. Verfahren nach einem vorstehenden Anspruch, wobei das Milchproteinkonzentrat mit geringer Lactose mehr als 90 % Protein (% TM) umfasst.

7. Verfahren nach einem vorstehenden Anspruch, wobei das Milchproteinkonzentrat mit geringer Lactose weniger als 2 % Calcium (% TM) umfasst.

8. Verfahren nach einem vorstehenden Anspruch, wobei das Calcium-abgereicherte Milchproteinkonzentrat mit geringer Lactose ein Milchproteinisolat ist, das weniger als 0,55 % Lactose und weniger als 2 % Calcium (% TM) umfasst.

9. Verfahren nach Anspruch 8, wobei das vorbehandelte Milchproteinkonzentrat durch Diafiltration bis zu einem Ausmaß von mindestens 80 % DF behandelt wird.

10. Verfahren nach einem vorstehenden Anspruch, wobei in dem Diafiltrationsschritt weiches Wasser oder eine verdünnte Salzlösung als ein Diafiltrationsmedium eingesetzt werden.

11. Verfahren nach Anspruch 8, wobei die verdünnte Salzlösung eine Salzkonzentration von 0,075-0,150 M Salzlösung aufweist.

12. Verfahren nach einem vorstehenden Anspruch, das einen Schritt des Trocknens des Milchproteinkonzentrats mit geringer Lactose oder Milchproteinisolats mit geringer Lactose zu einem Pulver einschließt.

**Revendications**

1. Méthode de production d'un concentré de protéines de lait à faible teneur en lactose, comprenant les étapes :

de mise à disposition d'un concentré de protéines de lait liquide de départ ;

de prétraitement du concentré de protéines de lait par ultra-sonification ; et

de traitement du concentré de protéines de lait prétraité par diafiltration afin d'obtenir un concentré de protéines de lait à faible teneur en lactose et appauvri en calcium.

2. Méthode selon la revendication 1, dans laquelle le concentré de protéines de lait liquide de départ comprend 70-95% de protéines, au moins 1% de lactose et au moins 2% de calcium (% MS).

3. Méthode selon la revendication 1 ou 2, dans laquelle le concentré de protéines de lait liquide de départ comprend 70-87% de protéines, 1-6% de lactose et 2,3-4% de calcium (% MS).

4. Méthode selon l'une quelconque des revendications précédentes, dans laquelle le concentré de protéines de lait à faible teneur en lactose contient au moins 20% de calcium en moins par rapport au concentré de protéines de lait liquide de départ.

5. Méthode selon l'une quelconque des revendications précédentes, dans laquelle le concentré de protéines de lait à faible teneur en lactose comprend moins de 0,55% de lactose (% MS).

6. Méthode selon l'une quelconque des revendications précédentes, dans laquelle le concentré de protéines de lait à faible teneur en lactose comprend plus de 90% de protéines (% MS).

7. Méthode selon l'une quelconque des revendications précédentes, dans laquelle le concentré de protéines de lait à faible teneur en lactose comprend moins de 2% de calcium (% MS).

8. Méthode selon l'une quelconque des revendications précédentes, dans laquelle le concentré de protéines de lait à faible teneur en lactose et appauvri en calcium est un isolat de protéines de lait comprenant moins de 0,55% de lactose et moins de 2% de calcium (% MS).

9. Méthode selon la revendication 8, le concentré de protéines de lait prétraité étant traité par diafiltration jusqu'à un degré d'au moins 80% DF.

10. Méthode selon l'une quelconque des revendications précédentes, dans laquelle l'étape de diafiltration utilise de l'eau douce ou une solution saline diluée comme milieu de diafiltration.

11. Méthode selon la revendication 8, dans laquelle la solution saline diluée présente une concentration en sel de solution saline à 0,075-0,150 M.

12. Méthode selon l'une quelconque des revendications précédentes, comportant une étape de séchage de l'isolat ou du concentré de protéines de lait à faible teneur en lactose afin de former une poudre.

## FIGURE A (COMPARATIVE)

Milk → Skimmed milk → Ultra-filtration → Diafiltration → (MPC solution / MPI solution) → Spray drying and evaporation → MPC/MPI powder

## FIGURE 1

MPC Fraction → Ultra-sonication → Diafiltration → LL-MPI: Lactose <0.48% w/w, Calcium < 1.8% w/w, Decalcification 28-30%

EP 4 066 647 B1

**FIGURE 2**

FIGURE 3

**EP 4 066 647 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8986768 B
- EP 2068646 A
- US 6139901 A
- WO 2009079691 A1